# EUROPÄISCHE PATENTSCHRIFT

(11) **EP 0 699 473 B1**
(45) Veröffentlichungstag und Bekanntmachung des Hinweises auf die Patenterteilung: **21.10.1998**
(21) Anmeldenummer: 94810497.1
(22) Anmeldetag: 31.08.1994
(51) Int. Cl.: B01J 19/32, B01J 19/00, B01J 10/00, C01B 7/07

(54) **Kolonneneinbauten für Suspensionen mit ausfällenden Stoffen**
Structural elements in columns for suspensions with precipitating particles
Dispositifs de garnissage dans colonne pour suspensions contenants des particules en précipitation

(43) Veröffentlichungstag der Anmeldung: 06.03.1996
(73) Patentinhaber: CT Umwelttechnik AG, CH-8404 Winterthur (CH)
(72) Erfinder: Ainscow Stuart, CH-8400 Winterthur (CH); Sittkus Rolf, D-88326 Aulendorf (DE)
(74) Vertreter: Heubeck, Bernhard

(56) Entgegenhaltungen:
- EP-A- 0 216 292
- EP-A- 0 504 622
- DE-A- 2 516 078
- FR-A- 1 171 119
- US-A- 4 303 479

## Beschreibung

Die Erfindung betrifft Kolonneneinbauten für Suspensionen mit ausfällenden Stoffen gemäss Oberbegriff von Anspruch 1. Sie betrifft auch Anlagen mit solchen Kolonneneinbauten und eine Verwendung derartiger Anlagen.

Bei einem bekannten Verfahren, bei dem eine Rauchgaswäsche mit einer Gewinnung von Chlorwasserstoff (HCl) oder konzentrierter Salzsäure kombiniert ist, wird eine bei der Rauchgaswäsche entstandene Rohsäure in einer Rektifikationskolonne behandelt, wobei eine konzentrierte CaCl₂-Lösung als Schleppmittel verwendet wird. Enthält die Rohsäure Sulfat, so ergibt sich beim Vermischen mit dem Schleppmittel eine Ausfällung, bei der Gips-Partikel abgeschieden werden. Das Schleppmittel zirkuliert in einem Kreislauf, in welchem es laufend aufbereitet wird (Aufkonzentrierung durch Eindampfung und teilweise Entfernung von Feststoffen). Es befinden sich daher suspendierte Partikel in der umgewälzten Lösung. Bei den gebräuchlichen Packungen, die im Abtriebsteil der Rektifikationskolonne verwendet werden, findet eine Ablagerung von Partikeln statt, die schliesslich zur Verstopfung der Packung führte, wenn nicht periodisch für eine Entfernung der Ablagerungen gesorgt würde.

Es ist Aufgabe der Erfindung, Kolonneneinbauten zu schaffen, bei welchen sich keine derartigen Ablagerungen von Partikeln einstellen oder bei welchen zumindest Ablagerungen in weit geringerem Ausmass erfolgen, so dass ein Reinigen der Einbauten weniger oft erforderlich ist. Diese Aufgabe wird mit den im Anspruch 1 genannten Massnahmen gelöst. Durch die Schwing- oder Flatterbewegung der Einbauten wird die Ablagerung von Partikeln verhindert oder zumindest behindert.

Die Ansprüche 2 bis 4 beziehen sich auf vorteilhafte Ausführungsformen der erfindungsgemässen Einbauten. Die Ansprüche 5 bis 8 betreffen Anlagen, in denen derartige Einbauten vorgesehen sind. Und der Anspruch 9 hat eine besondere Verwendung der erfindungsgemässen Anlagen zum Gegenstand.

Nachfolgend wird die Erfindung anhand der Zeichnungen erläutert. Es zeigen:
- Fig. 1: ein Schema einer Anlage, für die die erfindungsgemässen Einbauten vorgesehen sind,
- Fig. 2: einen Rohrschuss, der Teil einer ersten Ausführungsform der erfindungsgemässen Einbauten ist,
- Fig. 3: membranartige Elemente des Rohrschusses von Fig.2,
- Fig. 4: einen Schnitt durch den Rohrschuss,
- Fig. 5: einen kegelförmigen Hut mit radialen Einschnitten,
- Fig. 6: einen Längschnitt durch die erfindungsgemässen Einbauten mit schematisch dargestellten Strömungsverhältnissen,
- Fig. 7: Einbauten mit parallelen Lamellen und
- Fig. 8: einen Packungsausschnitt, längsgeschnitten, mit Einbauten gemäss Fig.7.

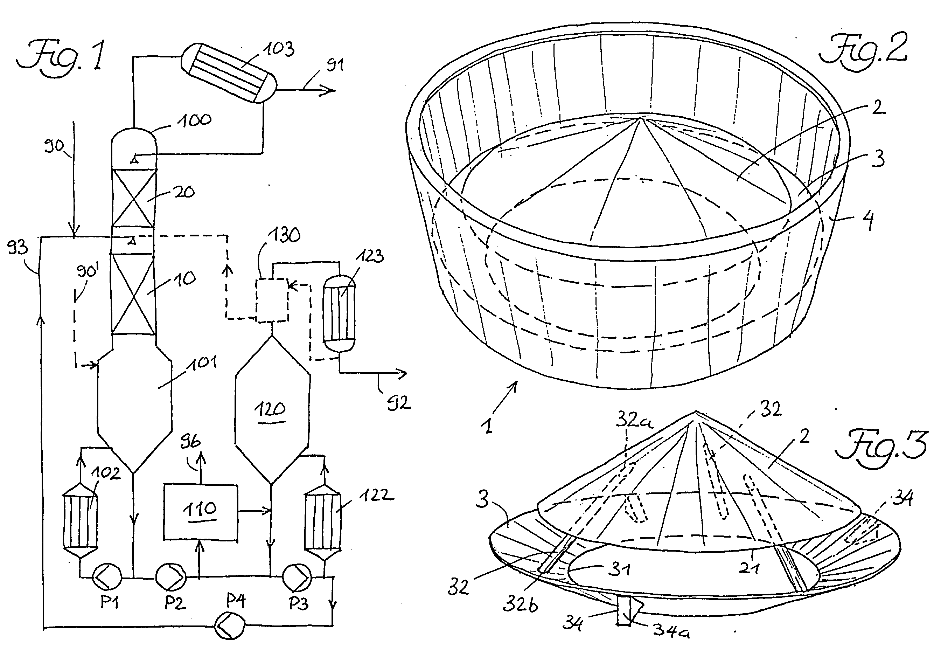

Die Anlage der Fig.1 besteht aus folgenden Komponenten: Rektifikationskolonne 100 mit Abtriebsteil 10, Verstärkerteil 20, Kopfkondensator 103 und Sumpf/Verdampfer 101, Umwälzpumpe P1 sowie Heizkammer 102; Schleppmittelkreislauf mit Pumpen P2, P3 sowie P4, Rückführleitung 93, Abschlämmsystem 110 und Eindampfstufe 120, der eine Heizkammer 122 und ein Kondensator 123 zugeordnet sind.

Beim Bezugszeichen 90 wird die Rohsäure aus einem Rauchgaswäscher in die Anlage eingespeist; bei 91 wird HCl-Gas abgezogen und einem nicht dargestellten Absorber zugeführt, wo konzentrierte Salzsäure hergestellt wird; bei 92 wird ein Brüdenkondensat, das eine kleine HCl-Konzentration aufweist, abgezogen und wieder in den Rauchgaswäscher zurückgeführt; und bei 96 werden abgeschlämmte Feststoffe aus der Anlage ausgeschleust.

Wird die Rohsäure bei 90' statt bei 90 direkt in den Sumpf 101 eingespeist, so wird, wie sich experimentell gezeigt hat, das Ablagerungsproblem entschärft. In diesem Fall weist allerdings die in den Eindampfer 120 eintretende Lösung eine höhere HCl-Konzentration auf und deshalb ist es vorteilhaft, wenn mittels Rektifikation in einer zusätzlichen Anlagenkomponente 130 Salzsäure abgetrennt und zurück in die Rektifikationskolonne 100 geleitet wird. Ein ähnliches Verfahren ist aus der EP 0 504 622 bekannt. Für nähere Angaben zum Verfahren sei auf diese Druckschrift verwiesen.

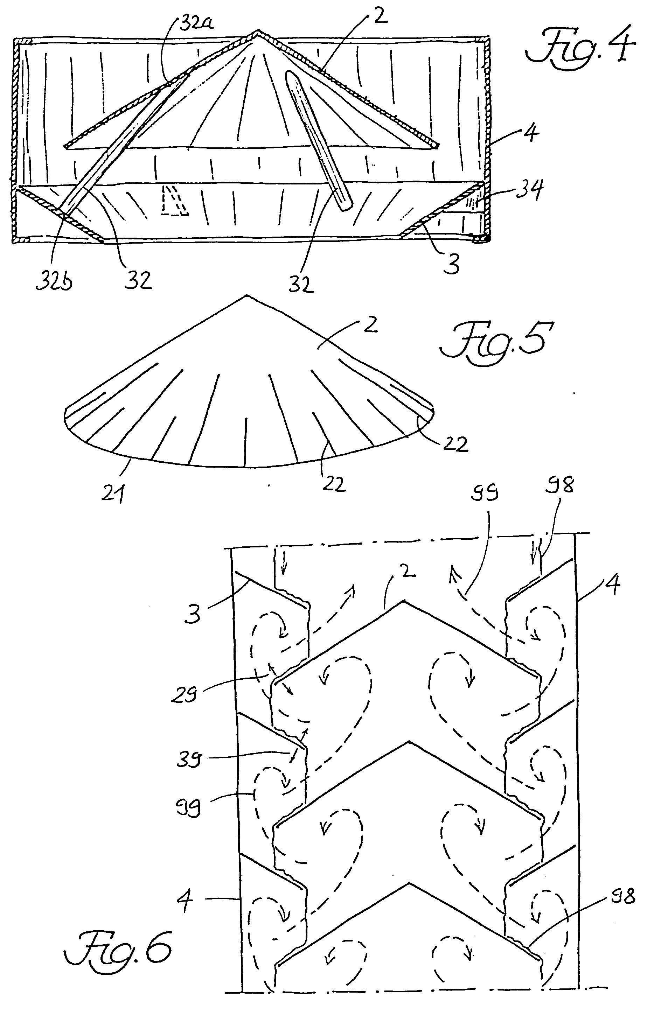

Der Rohrschuss 1 der Fig.2 ist Teil des Abtriebsteils 10, dessen Packung erfindungsgemäss ausgeführt ist. Er umfasst - siehe Fig.3 - zwei membranartige Elemente 2 und 3, nämlich einen kegelförmigen Hut 2 und einen kegelstumpfförmigen Kragen 3. In die Kolonne eingebaut bilden diese zwei Elemente eine alternierende Anordnung längs der Kolonnenachse. In der Normalprojektion auf den Kolonnenquerschnitt decken die zwei Elemente den Querschnitt überlappend ab.

Erfindungsgemäss sind die membranartigen Elemente aus einem flexiblen Material gefertigt, beispielsweise aus einem Kunststoff, insbesondere aus Polyvinylidenfluorid. Sie sind derart in der Kolonne befestigt, dass durch die strömenden Medien eine Schwing- oder Flatterbewegung der Elemente anregbar ist.

Beim vorliegenden Ausführungsbeispiel ist der Hut 2 mittels dreier Rohre 32 auf dem Kragen 3 befestigt, wobei die Befestigungsstellen 32a und 32b derart gewählt sind, dass besonders die Ränder 21 und 31 unbehindert schwingen oder flattern können. Der Kragen 3 ist mit drei Befestigungsstücken 34 (Kontaktflächen 34a) am Zylinder 4 des Rohrschusses 1 befestigt. In Fig.4 ist dargestellt, wie die Elemente 2 und 3 im Rohrschuss angeordnet sind. Bei Verwendung eines sehr flexiblen Materials kann der Kragen 3 auch über den gesamten Umfang mit dem Zylinder 4 verschweisst werden

Der Hut 2 in Fig.5 zeigt radiale Einschnitte 22, durch die eine Schwing- oder Flatterbewegung des Randes 21 erleichtert wird. Entsprechende Einschnitte können auch beim Kragen 2 (nicht dargestellt) vorgesehen werden.

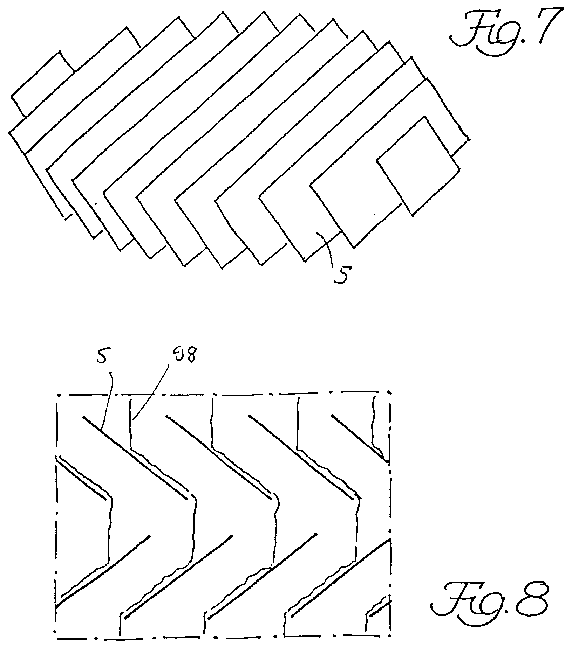

Der Längsschnitt in Fig.6 zeigt die über die Einbauten 2, 3 fliessende Suspension 98 und die sich im Gegenstrom bewegende Dampfphase 99. Durch die Einbauten werden einerseits Flüssigkeitsvorhänge in Form einer kaskadenartigen Ausbildung erzeugt. Andererseits sorgen die Einbauten als Schikanen für starke Richtungsänderungen des Dampfstroms, wodurch sich Wirbel in der Dampfphase ausbilden. Durch die strömenden Medien wird eine Schwing- oder Flatterbewegung der membranartigen Elemente angeregt (angedeutet durch die Pfeile 29, 39). Mittels einer pulsierenden Zufuhr der Suspension kann erreicht werden, dass die Bewegungen der membranartigen Elemente heftiger ausfallen.

Es sind selbstverständlich auch andere Ausführungsformen der membranartigen Elemente möglich. Die Fig.7 zeigt ein Beispiel, bei dem diese Elemente durch parallel angeordnete ebene Lamellen 5 gebildet sind. Fig.8 stellt einen Längsschnitt durch zwei benachbarte Lagen mit solchen Lamellen 5 dar.

## Patentansprüche

1. Kolonneneinbauten (1) für Suspensionen mit ausfällenden Stoffen, die für einen Stoffaustausch zwischen der Suspension und einer sich im Gegenstrom bewegenden Dampfphase vorgesehen sind, welche Einbauten membranartige Elemente (2, 3; 5) umfassen, die einerseits bezüglich der Suspension eine kaskadenartige Ausbildung von Flüssigkeitsvorhängen bewirken und andererseits bezüglich der Dampfphase als Schikanen für starke Richtungsänderungen des Dampfstroms sorgen, die zu einer Ausbildung von Wirbeln in der Dampfphase führen,
dadurch gekennzeichnet, dass die membranartigen Elemente aus einem flexiblen Material gefertigt sind und dass sie an wenigen Stellen in der Kolonne (100) derart befestigt sind, dass durch die strömenden Medien eine Schwing- oder Flatterbewegung der Elemente anregbar ist.

2. Einbauten nach Anspruch 1, dadurch gekennzeichnet, dass die membranartigen Elemente (2, 3) durch kegelförmige und kegelstumpfförmige Teile gebildet sind, die alternierend längs der Kolonnenachse angeordnet sind und die in der Normalprojektion auf den Kolonnenquerschnitt diesen überlappend abdecken.

3. Einbauten nach Anspruch 1, dadurch gekennzeichnet, dass die membranartigen Elemente durch parallel angeordnete ebene Lamellen (5) gebildet sind.

4. Einbauten nach einem der Ansprüche 1 bis 3, dadurch gekennzeichnet, dass die membranartigen Elemente(2, 3; 5) aus einem Kunststoff gefertigt sind, insbesondere aus Polyvinylidenfluorid.

5. Anlage zum Behandeln einer Rohsäure aus einer Rauchgaswäsche, mit einer Rektifikationskolonne (100), deren Abtriebsteil (10) Teil eines Schleppmittelkreislaufs ist, und mit einer Einspeisestelle (90; 90') für die Rohsäure, die in diesem Kreislauf angeordnet ist, wobei durch die Zumischung der Rohsäure zum Schleppmittel eine Suspension mit ausfällenden Stoffen sich ausbildet,
dadurch gekennzeichnet, dass der Abtriebsteil Einbauten (1) nach einem der Ansprüche 1 bis 4 umfasst.

6. Anlage nach Anspruch 5, dadurch gekennzeichnet, dass der Rohsäureeintritt (90) am Kopf des Abtriebsteils (10) angeordnet ist.

7. Anlage nach Anspruch 5, dadurch gekennzeichnet, dass der Rohsäureeintritt (90') am Sumpf (101) der Rektifikationskolonne (100) angeordnet ist.

8. Anlage nach Anspruch 7, dadurch gekennzeichnet, dass der Schleppmittelkreislauf mit einer zweiten Rektifikationsstufe (130) in Verbindung steht, mittels welcher ein säurearmes Brüdenkondensat erzeugbar ist.

9. Verwendung einer Anlage nach einem der Ansprüche 5 bis 8 zum Behandeln einer salzsäure- und sulfathaltigen Rohsäure aus einer Rauchgaswäsche, wobei im Verstärkerteil der Rektifikationskolonne Chlorwasserstoff abgetrennt wird und als Schleppmittel eine CaCl₂-Lösung verwendet wird.

## Claims

1. Column inserts (1) for suspensions with precipitating substances, which are provided for a material exchange between the suspension and a vapour phase moving in a counter-flow, with the inserts comprising membrane-like elements (2, 3; 5) which, on the one hand, bring about a cascade-like formation of liquid curtains with respect to the suspension and, on the other hand, ensure pronounced changes of direction for the vapour flow with respect to the vapour phase, which lead to the formation of eddies in the vapour phase, characterized in that the membrane-like elements are made from a flexible material, and in that they are secured at a few sites in the column (100) such that an oscillating movement or fluttering movement of the elements can be excited by the flowing media.

2. Inserts in accordance with claim 1, characterized in that the membrane-like elements (2, 3) are formed by conical or truncated cone-like parts which are alternatingly arranged along the column axis and which overlappingly cover over the column cross-section when viewed in the normal projection onto the column cross-section.

3. Inserts in accordance with claim 1, characterized in that the membrane-like elements are formed by flat lamella (5) which are arranged in parallel.

4. Inserts in accordance with one of the claims 1 to 3, characterized in that the membrane-like elements (2, 3; 5) are made from a plastic, in particular from polyvinylidenefluoride.

5. Plant for the treatment of a crude acid from a flue gas washing process having a rectification column (100), the stripper part (10) of which is part of an entrainer circulation, and having an infeed position (90; 90') for the crude acid which is arranged in this circulation, with a suspension with precipitating substances forming through the mixing of the crude acid with the entrainer, characterized in that the stripper part comprises inserts (1) in accordance with one of the claims 1 to 4.

6. Plant in accordance with claim 5, characterized in that the crude acid inlet (90) is arranged at the head of the stripper part (10).

7. Plant in accordance with claim 5, characterized in that the crude acid inlet (90') is arranged at the sump (101) of the rectification column (100).

8. Plant in accordance with claim 7, characterized in that the entrainer circulation communicates with a second rectification stage (130), by means of which a low acid exhaust vapour condensate can be generated.

9. Use of a plant in accordance with one of the claims 5 to 8 for the treatment of a crude acid containing hydrochloric acid and sulphate from a flue gas washing process, with hydrogen chloride being separated off in the amplification portion of the rectification column and a CaCl₂-solution being used as entrainer.

## Revendications

1. Dispositifs de garnissage dans une colonne (1) pour des suspensions avec des matières en précipitation, qui sont prévus pour un échange de matières entre la suspension et une phase vapeur se déplaçant à contre-courant, lesquels dispositifs de garnissage comprennent des éléments en membrane (2, 3 ; 5) qui effectuent, d'une part, en ce qui concerne la suspension, la formation en cascade de rideaux de liquide et d'autre part, en ce qui concerne la phase vapeur, qui servent de chicanes pour des fortes modifications de direction du courant de vapeur, qui conduisent à la formation de tourbillons dans la phase de vapeur,
caractérisés en ce que les éléments en membrane sont fabriqués en un matériau flexible et en ce qu'ils sont fixés en quelques points dans la colonne (100) de manière que par les fluides en écoulement, un mouvement d'oscillation ou d'ondulation des éléments puisse être provoqué.

2. Dispositifs de garnissage selon la revendication 1, caractérisés en ce que les éléments en membrane (2, 3) sont formés de pièces en forme de cône et en forme de tronc de cône qui sont agencées de façon alternée le long de l'axe de la colonne et qui, en projection normale sur la section transversale de la colonne, recouvrent celle-ci en se chevauchant.

3. Dispositifs de garnissage selon la revendication 1, caractérisés en ce que les éléments en membrane sont formés de lamelles planes (5) agencées parallèlement.

4. Dispositifs de garnissage selon l'une des revendications 1 à 3, caractérisés en ce que les éléments en membrane (2, 3 ; 5) sont fabriqués en une matière synthétique, en particulier en fluorure de polyvinylidène.

5. Installation pour le traitement d'un acide brut provenant d'un lavage de gaz de combustion avec une colonne de rectification (100), dont la partie de sortie (10) fait partie d'un circuit d'un agent d'entraînement et avec un point d'alimentation (90 ; 90') pour l'acide brut, qui est agencé dans ce circuit, et il se forme par le mélange de l'acide brut à l'agent d'entraînement, une suspension avec des matières en précipitation, caractérisée en ce que la partie de sortie contient des dispositifs de garnissage selon l'une des revendications 1 à 4.

6. Installation selon la revendication 5, caractérisée en ce que l'entrée de l'acide brut (90) est agencée au sommet de la partie de sortie (10).

7. Installation selon la revendication 5, caractérisée en ce que l'entrée de l'acide brut (90') est agencée sur la fosse (101) de la colonne de rectification (100).

8. Installation selon la revendication 7, caractérisée en ce que le circuit de l'agent d'entraînement est en liaison avec un second étage de rectification (130) au moyen duquel peut être produit un condensat de buées pauvre en acide.

9. Utilisation d'une installation selon l'une des revendications 5 à 8, pour le traitement d'un acide brut contenant de l'acide miriatique et des sulfates provenant d'un lavage de gaz de combustion où, dans la partie d'amplificateur de la colonne de rectification, de l'acide chlorhydrique est séparé et on utilise, en tant qu'agent d'entraînement, une solution de CaCl₂.
